# EUROPEAN PATENT SPECIFICATION

(11) **EP 3 897 174 B1**
(45) Date of publication and mention of the grant of the patent: **14.05.2025**
(21) Application number: 19829111.4
(22) Date of filing: 17.12.2019
(51) Int. Cl.: A23C 11/10, A23L 2/00, A23J 1/14, A23J 3/14, A23L 2/66, A23L 11/00, A23L 11/60, A23L 25/00

(54) **VEGAN FOOD COMPOSITION AND METHOD OF MAKING THEREOF**
VEGANE NAHRUNGSMITTELZUSAMMENSETZUNG UND VERFAHREN ZUR HERSTELLUNG DAVON
COMPOSITION ALIMENTAIRE VÉGANE ET SON PROCÉDÉ DE FABRICATION

(30) Priority: 20.12.2018 EP 18214321; 10.07.2019 EP 19185567
(43) Date of publication of application: 27.10.2021
(73) Proprietor: Société des Produits Nestlé S.A., 1800 Vevey (CH)
(72) Inventor: DIONISI, Fabiola, 1066 Epalinges (CH); MOCCAND, Cyril, 1132 Lully (CH); RAY, Joydeep, 1066 Epalinges (CH); ROSSI VAUTHEY, Patricia, 1071 Rivaz (CH); SAGALOWICZ, Laurent, 1807 Blonay (CH); SAUVAGEAT, Jean-Luc, 1066 Epalinges (CH); STUDER, Marianne, 1054 Morrens (CH); VAFEIADI, Christina, 1000 Lausanne 26 (CH)
(74) Representative: Slaven, John William
(86) International application number: PCT/EP2019/085766
(87) International publication number: WO 2020/127358

(56) References cited:
- WO-A1-2013/078510
- US-A- 4 639 374
- US-A1- 2012 128 832
- US-A1- 2016 309 732
- US-A1- 2017 071 230
- US-A1- 2018 271 126
- US-A1- 2018 295 849

## Description

### Background of the invention

Certain consumers do not want to consume milk because of its animal origin, for example due to lactose intolerance or to dairy allergies. They may also see potential environmental sustainability issues.

Alternatives to milk do exist. However, they often suffer from several disadvantages. They are often far from milk in terms of composition and protein quality. They generally use protein extracts or isolates as source of protein, have a long list of ingredients, are not clean label (e.g. comprise gellan gum, hydrocolloids, and other additives), and the taste can be unpleasant, bitter and/or astringent.

The traditional means of producing a milk substitute uses acid or basic treatment. Filtration or centrifugation may be used to remove large particles, which creates grittiness and bitterness. As a result, the efficiency of the process is low and good nutrients like dietary fibers are removed. In addition, taste is often an issue and many ingredients are added to mask off-taste. Furthermore, many constituents like flavors and protein concentrates are often used in alternative plant milks and those have artificial and nonnatural connotations for the consumer and generally have long ingredient lists.

The dairy alternative market is growing by 11% each year and finding an alternative with good nutrition and taste will be a major advantage in this competitive field.

US20130196028A1 discloses a method of making a chickpea soluble fraction, but which includes the removal of dietary fiber by filtration.

US20160309732A1 discloses the use of amylase to prevent gelation of chickpeas and adzuki beans. Filtration is used to prevent graininess.

US 2017/0071230 discloses a spreadable cream. A spreadable cream cannot be used as a drink or as a liquid cream. A spreadable cream is characterized by having a high viscosity, which in US 2017/0071230 is between 8 and 25 Pa s (8 000 and 25 000 cP) In addition, in US 2017/0071230, no mention is made of preventing gelation, starch retrogradation or of the use of an enzyme.

WO 2013078510 discloses an alternative plant milk that contains at least nuts, a source of proteins and a carbohydrate source to match composition of dairy milk. This leads to a long list of ingredients having an unnatural image with ingredients such as protein concentrate or pea protein. US 2018/0295849 A1 discloses a plant-based milk alternative composition comprising chickpea, useful in various food and beverage products, that approximates the nutritional and functional properties of dairy milk but does not contain dairy or lactose.

Most prior art vegan compositions use filtering to reduce particle size which has the disadvantage of removing dietary fiber and other beneficial components from the composition.

### Summary of invention

The present invention provides a vegan food composition which surprisingly preserves natural goodness and avoids grittiness without discarding any nutrients, particularly dietary fibers. In addition, it leads to short ingredient list using only natural ingredients.

Accordingly, the invention is defined in the appended claims.

The present invention provides a vegan food composition comprising at least 30 wt% legume and at least 20 wt% non-legume seeds or non-legume nuts on a dry basis, wherein said composition comprises at least 5 wt% dietary fiber provided by the legume and at least 22 wt% protein provided by any one or more of said legume, non-legume seed, and non-legume nuts, wherein the D90 particle size for the volume weighted size distribution of said composition is less than 400 microns, wherein the legume is chickpea which is de-hulled and roasted, and wherein the vegan food composition is entirely devoid of animal products, or animal derived products, and wherein the D90 particle size for the volume weighted size distribution is the diameter of particle, for which 90% of the volume of particles have a diameter smaller than this D90.

In one embodiment, the vegan food composition is a powder.

In one embodiment, the vegan food composition is a liquid having a viscosity of less than 5.5 Pa s as measured at 20°C with apparatus at a shear rate of 100 s⁻¹.

In one embodiment, the vegan food composition is a milk analogue.

In one embodiment, the ratio of total lysine in mg to total protein in g is higher than 30, preferably higher than 40.

In one embodiment, the vegan food composition comprises between 40 wt% and 70 wt% legume.

According to the invention, the legume is de-hulled and roasted chickpea.

In one embodiment, the vegan food composition comprises between 24 wt% and 40 wt% protein provided by the legume and non-legume seeds.

In one embodiment, the non-legume seed is sunflower. In one embodiment, the non-legume seed is defatted by at least 20%.

In one embodiment, the D90 particle size of the composition is less than 300 microns, preferably less than 200 microns, preferably less than 100 microns.

In one embodiment, the composition has a D50 particle size less than 50 microns, preferably less than 40 microns, preferably less than 30 microns.

The inventors have surprisingly found that a combination of legumes with seeds or nuts or defatted seeds or nuts can provide a composition, which is close to milk and which has the right balance between carbohydrates, fat and protein as well as a good quantity of each essential amino acid and physical characteristics which are close to milk or liquid cream.

There is also provided a food product comprising the vegan food composition according to the invention.

The invention also provides a method of making a vegan food composition entirely devoid of animal products, or animal derived products, comprising: a. Mixing at least 30 wt% legume and at least 20 wt % non-legume seed or non-legume nuts on a dry basis, wherein the legume is de-hulled and roasted chickpea; b. Reducing the D90 particle size for the volume weighted size distribution to less than 1000 microns.; c. Adding an aqueous phase; d. Adding enzyme to prevent gelation, heating, and de-activating the enzyme; e. Reducing particle size so that the D90 particle size for the volume weighted size distribution is less than 400 microns; f. Homogenising; g. Sterilizing or pasteurizing,
wherein the D90 particle size for the volume weighted size distribution is the diameter of particle, for which 90% of the volume of particles have a diameter smaller than this D90.

In one embodiment, the non-legume seed is selected from sunflower, pistachio, chia, sacha inchi, flax or hemp.

In one embodiment, the non-legume seed is sunflower.

In one embodiment, at least 20 wt% of fat is removed from the non-legume seed.

In one embodiment, the fat is removed using a mechanical press, by solvent extraction, or a process using CO2.

In one embodiment, the enzyme is alpha amylase.

In one embodiment, micronization is performed to reduce the particle size so that the D90 is lower than 300 microns, preferably lower than 200 microns, preferably lower than 150 microns, preferably lower than 100 microns, preferably lower than 80 microns.

In one embodiment, micronization is performed to reduce the particle size so that the D50 is lower than 50 microns, preferably lower than 40 microns, preferably lower than 30 microns.

This may be performed by Stirred media mill, Bead mill, Jet mill, Ball mill, Pin mill, Roller grinder, Roller refiner, Hammer mill, Colloidal mill, Impact mill, Stone mill, Cryogenic milling, Rod mill, Vibratory mill, or by Cutting mill.

Preferably micronization is performed using a Stirred media mill, Bead mill, Ball mill, Jet mill or a Pin mill.

In one embodiment, drying is performed by spray drying, roller drying, belt drying, vacuum belt drying, spray freezing, spray chilling, ray drying, oven drying, convection drying, microwave drying, freeze drying, pulsed electric field assisted drying, ultrasound assisted drying, fluid bed drying, ring drying, vortex drying, or IR drying (radiation)

In a preferred embodiment, drying is performed by spray drying, roller dryer, belt drying, or vacuum belt drying.

In one embodiment, the vegan food composition is deodorized using vacuum at a temperature higher than 40°C.

In an alternative embodiment, method step e) involving micronization is performed before method steps c) and d) involving adding aqueous phase and enzyme. In one embodiment, the aqueous phase is water.

### Detailed description

### Definitions

When a composition is described herein in terms of wt%, this means a mixture of the ingredients on a dry basis, unless indicated otherwise.

As used herein, an "analogue" of a substance is considered to be a parallel of that substance in regard to one or more of its major characteristics. A "milk analogue" as used herein will parallel milk in the major characteristics of purpose, usage, and nutrition. It has similar levels of energy, protein, carbohydrates, vitamins and minerals. Preferably, the milk analogue is an analogue of cow's milk.

The term "vegan food composition" refers to an edible composition which is entirely devoid of animal products, or animal derived products. Non-limiting examples include meat, eggs, milk, and honey.

The vegan food composition of the invention can be solid, for example a powder or it can be liquid, for example a milk analogue. It can be added to a food product.

### Legume

A legume is a plant in the family *Fabaceae* (or *Leguminosae*), the seed of such a plant (also called pulse). Legumes are grown agriculturally, primarily for human consumption, for livestock forage and silage, and as soil-enhancing green manure.

According to the invention, the legume is chickpea. In other embodiments that are outside the subject-matter of the claims, the following legumes can be used in the vegan food composition :
beans, lentils and peas, for example kidney beans, navy beans, pinto beans, haricot beans, lima beans, butter beans, azuki beans, mung beans, golden gram, green gram, black gram, urad, fava beans, scarlet runner beans, rice beans, garbanzo beans, cranberry beans, lima beans, green peas, snow peas, snap peas, split peas and black-eyed peas.

The legume is de-hulled, roasted chickpea.

### Non-legume seeds and non-legume nuts

The following non-legume seeds can be used in the vegan food composition according to the invention: sunflower seeds, cotton seeds, safflower seeds, pumpkin seeds, squash seeds, butternuts, walnut, almond, hemp, sacha inchi, pistchio, canola seeds, chia and flaxseed.

Preferably, the non-legume seeds are selected from sunflower seeds, cottonseeds, pumpkin, hemp, chia and flaxseeds. Preferably the non-legume seed is defatted. Preferably, the non-legume seed is sunflower. Preferably, the non-legume seed is defatted sunflower.

The following non-legume nuts can be used in the vegan food composition according to the invention: hazelnuts, brazil nuts, pilinuts, cashew nuts, macadamia nuts, tiger nuts, peanuts, pecan nuts, pili nuts, pine nuts, pistachio, chestnuts, pecan nuts.

Preferably, the non-legume nut is peanut.

### Dietary Fiber

The preferred range of dietary fiber provided by the legume in the vegan food composition according to the invention is 5 wt% to 25 wt%, more preferably 10 wt% to 20 wt%, most preferably 10 wt% to 15 wt%.

### Protein

The preferred range of protein in the vegan food composition according to the invention is 22 wt% to 40 wt%, most preferably 25 wt% to 38 wt%.

### Particle size

In one embodiment, the D90 particle size for the volume weighted size distribution is less than 300 microns, preferably less than 200 microns, preferably less than 100 microns. D90 for the volume weighted distribution is the diameter of particle, for which 90% of the volume of particles have a diameter smaller than this D90.

In one embodiment, micronization is performed to reduce the particle size so that the D50 is lower than 50 microns, preferably lower than 40 microns, preferably lower than 30 microns. D50 for the volume weighted distribution is the diameter of particle, for which 50% of the volume of particles have a diameter smaller than this D90. The particle size distribution weighted volume for a powder can be determined by automatized

microscopy technique like the one obtained with CamSizer (Camsizer XT Retsch) or by dispersing the particle in water using a rotor-stator and performing light scattering. For a liquid, it can be determined using light scattering. In the following text, D90 and D50 are always used for a volume weighted size distribution and describe the particle diameter. Volume weighted size distribution is very familiar for one skilled in the art.

The D90 particle size distribution in the vegan food composition according to the invention is lower than 400 microns, preferably lower than 300 microns, preferably lower than 200 microns, preferably lower than 100 microns, preferably lower than 80 microns.

The D50 particle size distribution in the vegan food composition according to the invention is lower than 50 microns, preferably lower than 40 microns, preferably lower than 30 microns, preferably lower than 20 microns.

### Fat

The preferred range of fat content of the vegan food composition according to the invention is between 0 - 35 wt%, preferably 1-35wt%, preferably between 3 - 30 wt%, preferably between 5 - 25wt%.

### Carbohydrate

The preferred range of carbohydrate content of the vegan food composition according to the invention is 25 wt% to 50 wt%, which does not include contribution from the dietary fibers of the composition.

### Protein quality

Protein quality is closely associated with the various essential amino acid ratios. The amino acid ratio for a given essential amino acid is defined by the quantity of this essential amino acid in mg divided by total protein in g. There are accepted standard values for these ratios for each essential amino acid (Protein quality evaluation, Report of the joint FAO-WHO Expert Consulation Bethesda Md USA 4-8 December 1989), which defines if a protein source contains enough of this essential amino acid. For many protein sources such as nuts, seeds and cereals, the limiting amino acid is lysine and in addition, lysine degrades during food processing due to association with other nutrients and Maillard reaction (Tomé, D. & Bos, C. Lysine requirement through the human life cycle. Journal of Nutrition 137, 1642S-1645S (2007)). For seeds and nuts, the ratio lysine to total protein is typically in the range 30-45 mg/g, while for legumes it is typically in the range 60-75mg/g. It should be noted that in a final product, lysine amount is even lower due to chemical reaction. The normalized amino acid ratio for any essential amino acids refers to the amino acid ratio divided by a standard essential amino acid quantity for each amino acid. This standard amino acid quantity is taken for lysine to be 57mg/g, for threonine 31mg/g, for isoleucine 32mg/g, for leucine 66 mg/g, for lysine 57mg/g, for valine 43mg/g, for histidine 20mg/g, for tryptophan 8.5mg/g for aromatic amino acid, which is the sum phenylalamine + tyrosine 52 mg/g, and for sulfurous amino acids, which are the sum of Methionine plus Cysteine. These values are in accordance with recommendations for children aged 6 months to 3 years (Dietary protein quality evaluation in human nutrition, Report of an FAO Expert Consultation, FAO food and nutrition paper 92, 2013). The amino acid score is the lowest value of all the normalized amino acid ratio corresponding to the amino acids cited above. In one embodiment, the amino acid score is higher than 0.6, preferably higher than 0.7.

### Vegan food composition

In one embodiment, the vegan food composition is a milk analogue comprising 55 to 65 wt%, preferably about 60 wt% de-hulled roasted chickpea and 35 to 45 wt%, preferably 40 wt% defatted sunflower on a dry basis, wherein said composition comprises 10 to 20 wt%, preferably about 14 wt% dietary fiber and 20 to 30 wt%, preferably about 26 wt% protein, and wherein the D90 is less than 60 microns, preferably about 49 microns.

In one embodiment, the vegan food composition is a powder comprising 45 to 55 wt%, preferably about 50 wt% de-hulled roasted chickpea and 45 to 55 wt%, preferably about 50 wt% defatted sunflower on a dry basis, wherein said composition comprises 10 to 20 wt%, preferably about 13 wt% dietary fiber and 30 to 40 wt%, preferably about 35 wt% protein, and wherein the D90 is less than 70 microns, preferably about 58 microns.

In one embodiment, the vegan food composition is a powder comprising 45 to 55 wt%, preferably about 50 wt% de-hulled roasted chickpea and 45 to 55 wt%, preferably about 50 wt% defatted sunflower on a dry basis, and sunflower oil, wherein said composition comprises 10 to 20 wt%, preferably about 12 wt% dietary fiber and 20 to 30 wt%, preferably about 28 wt% protein, and wherein the D90 is less than 60 microns, preferably about 52 microns.

### Food product

In one embodiment, there is provided a food product comprising the vegan food composition according to the invention. The food product can be, for example, a vegan milk analogue based product, Nesquik, Milo, apple puree and other fruit extracts, strawberry puree, creams, culinary sauces, chocolate and other confectionary.

In one embodiment, the food product can be a vegan cream analogue.

In one embodiment, the food product has a viscosity of less than 5 Pa s, preferably of less than 0.8 Pa s, preferably of less than 0.5 Pa s, preferably of less than 0.1 Pa s, preferably of less than 0.05 Pa s, as measured at 25°C with apparatus at a shear rate of 100 s⁻¹.

In one embodiment, the food product has a viscosity of less than 5.5 Pa s, preferably of less than 0.9 Pa s, preferably of less than 0.55 Pa s, preferably of less than 0.11 Pa s, preferably of less than 0.055 Pa s, as measured at 20°C with apparatus at a shear rate of 100 s⁻¹.

### Process

In one embodiment, the invention relates to a method of making a vegan food composition comprising mixing chickpea and sunflower seeds. The chickpeas are de-hulled and roasted, preferably roasted for at least 15 minutes to at least 110°C. The sunflower seeds are preferably defatted, for example by using a manual press.

For the pre-grinding step, 60 wt% chickpea can be dry mixed with 40 wt% defatted sunflower. The size is then reduced, preferably by milling, preferably to a D90 less than 1000 microns.

For the enzymatic treatment step, the mixture is preferably diluted in water (10 to 20% TS (total solids)). Pre-gelatinization can then be performed at about 90°C for about 15 mins. Alpha amylase can then be added for 15 mins at 80°C, followed by a deactivation step, for example at 135°C for at least 80 s.

For the micronization step, the mixture can be subjected to ball milling to get a D90 lower than 400 microns, preferably lower than 300 microns, preferably lower than 200 microns, more preferably lower than 100 microns, most preferably lower than 80 microns. Evaporation can then be used to remove off flavors, for example from 15% to 32% TS, followed by dilution, for example to 12% TS.

A homogenization step is then carried out, for example at a pressure of 250 bar and then at 50 bar.

A heat treatment step is then performed, for example by heating to at least 107°C for at least 38 s.

A drying step may then be carried out, for example a spray drying step, for example to TS 97%.

In one embodiment, the invention relates to a method of making a vegan composition comprising mixing chickpea and sunflower protein extract or sunflower flour. For ingredient preparation, the chickpeas are de-hulled and roasted and are preferably roasted for at least 30 minutes at 160°C. The sunflower seeds are preferably defatted, for example by using a manual press.

For the pre-grinding step, 50 wt% chickpea is dry mixed with 50 wt% defatted sunflower. The D90 particle size is then reduced, preferably by milling, preferably to a D90 particle size of less than 1000 microns.

For the micronization step, the mixture can be subjected to Jet milling, preferably to a D90 particle size of about 90 microns or less, or to about 60 microns or less.

For the enzymatic treatment step, the mixture is preferably diluted in water (15% TS). Pre-gelatinization can then be performed at about 90°C for about 15 mins. Alpha amylase can then be added for 80°C for at least 15 mins, followed by a deactivation step, for example at 135°C for at least 10 s.

Evaporation can then be used to remove off flavors, for example from 15% to 32% TS, followed by dilution, for example to 12% TS.

A homogenization step may then be carried out, for example at 250 + 50 bar.

A heat treatment step may then be performed, for example by heating to at least 107°C for at least 10 seconds.

A drying step may then be carried out, for example a spray drying step, for example to TS 97%.

In one embodiment, the invention relates to a method of making a vegan composition comprising mixing chickpea, sunflower protein extract, and sunflower oil. For ingredient preparation, the chickpeas are de-hulled. The chickpea are roasted, preferably for at least 1 hour at 160°C. The sunflower are preferably defatted, for example by using a manual press.

For the pre-grinding step, 50 wt% chickpea is dry mixed with 50 wt% defatted sunflower.

The D90 particle size is then reduced, preferably by milling, preferably to a D90 particle size of less than 1000 microns or to a D50 particle size of less than 200 microns.

For the micronization step, the mixture can be subjected to Jet milling to a D90 lower than 400 microns, preferably lower than 300 microns, preferably lower than 200 microns, preferably lower than 100 microns, most preferably lower than 80 microns or to a D50 lower than 80 microns, preferably lower than 60 microns, preferably lower than 50 microns, preferably lower than 40 microns, most preferably lower than 30 microns.

For the enzymatic treatment step, the mixture is preferably diluted in water (12% TS). Pre-gelatinization can then be performed at about 90°C for about 15 mins. Alpha amylase can then be added for 80°C for at least 15 mins, followed by a deactivation step, for example at 135°C for at least 10 s.

Evaporation can then be used to remove off flavors, for example from 12% to 32% TS, followed by dilution, for example to 12% TS. Fat addition may occur at this stage.

A homogenization step is then carried out, for example at 250 + 50 bar.

A heat treatment step is then performed, for example by heating to at least 100°C for at least 10 s.

A drying step may then be carried out, for example a spray drying step, for example to TS 97%.

In one embodiment, the invention relates to a method of making a vegan food composition comprising mixing between 40 wt% and 70 wt% chickpea flour or chickpea extracts with between 30 wt% and 60 wt% sunflower flour or sunflower extract.

For the enzymatic treatment step, the mixture is preferably diluted in water (10 to 20% TS (total solids). Pre-gelatinization can then be performed at about 90°C for about 15 mins. Alpha amylase can then be added for 15 mins at 80°C, followed by a deactivation step, for example at 135°C for at least 10 s.

For the micronization step, the mixture can be subjected to ball milling to get a D90 lower than 400 microns, preferably lower than 300 microns, preferably lower than 200 microns, more preferably lower than 100 microns, most preferably lower than 80 microns or to a D50 lower than 80 microns, preferably lower than 60 microns, preferably lower than 50 microns, preferably lower than 40 microns, most preferably lower than 30 microns.. Evaporation can then be used to remove off flavors, for example from 15% to 32% TS, followed by dilution, for example to 12% TS.

A homogenization step is then carried out, for example at a pressure of 250 bar and then at 50 bar.

A heat treatment step is then performed, for example by heating to at least 107°C for at least 38 s.

A drying step may then be carried out, for example a spray drying step, for example to TS 97%.

### Examples

### Example 1: Drink obtained from processing raw chickpeas and raw sunflower seeds

Chickpeas were sourced from Vivien Paille (France). Chickpea de-hulling was carried out using Laboratory shelling Machine (F.H. SCHULE Mühlenbau GmbH, Germany) for 90s and at 90% of maximum speed.

The chickpeas were then roasted using a Salvid combisteam CSC furnace (Germany) operating at 160°C for 40 minutes.

Bio Sunflower seeds were purchased at Migros (Switzerland). The sunflower seeds were defatted using a manual press (Rommelsbacher OP 700 "Emilio", Germany). A sunflower cake and an oily phase were obtained.

60 wt% of de-hulled roasted chickpea was dry mixed with 40 wt% defatted sunflower to get a composition close to milk. The size of the particles was reduced using by hammer milling (Retsch ZM1, Switzerland) operating at speed 2 with grid size of 1 mm.

12 wt% of the solid mixture was added to 88 wt% of water and was introduced into a Tetra Almix B200-100 VA Scanima reactor (Germany). The mixture was heated under agitation for 15 minutes at 90°C, followed by cooling down to 80°C. 0.007 wt%, in reference to the total mass, of Ban 800 (Novozymes, Denmark), where the active component is the enzyme alpha amylase was added. The temperature was maintained at 80°C and agitation was carried out for 15 minutes. The mixture was then heated for 81 seconds in an APV HTST (Germany) at 135°C to deactivate the alpha amylase.

Two passages of Ball-milling (Alpine Okawara, Japan) were then applied. The first passage was performed at 2000 rpm 10l/h and the second passage was performed at 2500 rpm 20l/h.

The mixture was then placed in an evaporator (CEP-01 Okawara, Japan) operating at a pressure of 30 mb and 60°C until the solid content was about 30%. This operation removed off-flavor. Water was added again to reach a solid content of 12%. Smell and taste were much better after evaporation and dilution to 12% than before. Moreover, the evaporated aqueous phase has a strong off-flavor smell.

Homogenization (APV, HTST, Germany) was realized using pressure of 250/50 Bars. Heat treatment was then applied at 107°C for 38 seconds (APV, HTST, Germany)

During all the operations in liquid, the pH was adjusted either with NaOH or with HCl to pH 6.5.

A ready drink milk alternative was obtained, which could be consumed as such giving a delicious drink with a nutty flavor. It was also diluted with water and was aromatized with fruits and with chocolate resulting in a delicious drink.

The particle size was determined using a Malvern 3000 instrument using the Mie model with stirrer speed 200, material name : vegetable oil, refractive index 1.4694, particle density 0.912 and absorption index 0.03, dispersant was water and corresponding refractive index 1.33. Result is the average of 5 measurements. The D90 was determined to be 49 microns and D50 was 22 microns.

For analyzing the macronutrient content of the milk, the liquid was first dried using spray drying.

The protein composition was determined by the Dumas method with a conversion factor of 6.25. The lipid composition was determined by acid hydrolysis.

The contents were determined to be as follows: protein 26%, fat 16.5%, dietary fiber 14% and carbohydrate 36%. This composition is very similar to full fat milk (Table 1). In addition, a large amount of dietary fiber is present.

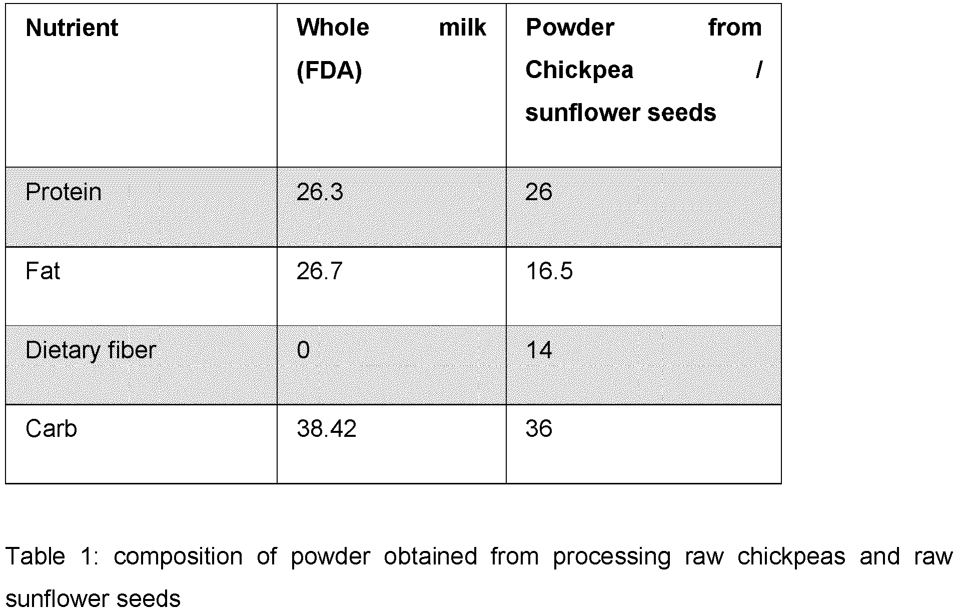

The amino acid content and the amino acid scores are given in the following table 2

**Table 2:**

| **Indispensable AA** | Content in g/100g of product | Content in g/100g of protein | Amino acid ratio |
|---|---|---|---|
| Tryptophan | 0,328 | 1,261538 | 1,484163 |
| Threonine | 0,902 | 3,469231 | 1,119107 |
| Isoleucine | 1,06 | 4,076923 | 1,274038 |
| Leucine | 1,7 | 6,538462 | 0,990676 |
| Lysine | 1,14 | 4,384615 | 0,769231 |
| Valine | 1,2 | 4,615385 | 1,073345 |
| Histidine | 0,603 | 2,319231 | 1,159615 |
| Sulfurous amino acids (Methionine+Cysteine) | 0,905 | 3,480769 | 1,289174 |
| Aromatic amino acids (Phe+Tyr) | 1,968 | 7,569231 | 1,455621 |

The amino acid score is the lowest amino acid ratio. It corresponds to the lysine. Therefore amino acid score is 0.77. The ratio of total lysine in mg to total protein in g is 43,8.

### Example 2: Spray drying of ready drink milk alternative

The ready drink milk alternative of example 1 was sprayed-dried.

Spray-drying was then performed using a Tower Niro SD 6.3N (GEA, Denmark) with 160°C inlet temperature, 85°C outlet temperature and operating at 15kg/h.

The size of the particles was determined using a CamSizer instrument (Camsizer XT Retsch Xdry, using a pressure of 120 Pa, the results being expressed on a volume basis with the Xₐᵣₑₐ, manual Camsizer) to correspond to a D90 of 52 µm and a D50 of 24 µm.

9% of this powder was added in water to reconstitute delicious alternatives to milk. In this drink, two coffee spoons of Nesquik were added in 250 ml. In another experiment, Milo was added. In another experiment, apple puree was added. It was also tasted with strawberry puree.

9% of the powder was dispersed in water using a Polytron PT3000 operating for 2 minutes. Viscosity was measured using a Physica MCR 501 (Anton Paar), with a Pelletier temperature of 25°C, with 15 points for 20 seconds. Bob length was 40 mm, bob diameter was 26.65mm, cup diameter was 28.92mm and active length: 120.2mm. Viscosity was found to be: 0.013 Pas (13cP) at a shear rate of 100 s⁻¹.

15% of the powder was dispersed in water using a Polytron PT3000 operating for 2 minutes. Viscosity was measured using a Physica MCR 501 (Anton Paar), with a Pelletier temperature of 25°C, with 15 points for 20 seconds. Bob length was 40 mm, bob diameter was 26.65mm, cup diameter was 28.92mm and active length: 120.2mm.

Viscosity was found to be: 0.16 Pas (160cP) at a shear rate of 100 s⁻¹.

### Example 3: Low fat powder obtained from processing raw chickpeas and defatted sunflower flour

Chickpeas were supplied by Zwicky (Switzerland). Chickpea de-hulling was carried out using Laboratory shelling Machine (F.H. SCHULE Mühlenbau GmbH, Germany) for 90 s and at 90% of maximum speed.

The chickpeas were then roasted using a Salvid combisteam CSC furnace (Germany) operating at 160°C for 40 minutes.

50 wt% of de-hulled roasted chickpea was dry mixed with 50 wt% defatted sunflower flour (Heliaflor 55, Austrade, Germany) to get a composition close to skimmed milk. The size of the particles was reduced by Hammer milling (Retsch ZM1, Switzerland). After Jet milling was applied (Fluid Jet Mill J-70, Techologica mechanica, Italy) using a feeding rate of 600g/ hour, at air pressure Ventury of 10 bars and an air pressure ring of 11 bars.

12 wt% of the solid mixture was added to 88 wt% of water and introduced into a Tetra Almix B200-100 VA Scanima reactor (Germany). The mixture was heated under agitation for 15 minutes at 90°C, followed by cooling down to 80°C. 0.007 wt%, in reference to the total mass, of Ban 800 (Novozymes, Denmark), where the active component is the enzyme alpha amylase was added. The temperature was maintained at 80°C and agitation was carried out for 15 minutes. The mixture was then heated for 81 seconds in an APV HTST (Germany) at 135°C to deactivate the enzyme alpha amylase.

The mixture was then placed in an evaporator (CEP-01 Okawara, Japan) operating at a pressure of 30 mb and 60°C until the solid content was about 30%. This operation removes off-flavor. Water was added again to reach a solid content of 12%.

Homogenization (APV, HTST, Germany) was realized using pressure of 250/50 Bars. Heat treatment was then applied at 107°C for 38 seconds (APV, HTST, Germany).

During all the operations in liquid, the pH was adjusted either with NaOH or with HCl to pH 6.5.

Spray-drying was then performed using a Tower Niro SD 6.3N (GEA, Denmark) with 160°C inlet temperature, 85°C outlet temperature and operating at 15kg/h.

The protein composition was determined by the Dumas method with a conversion factor of 6.25. The lipid composition was determined by acid hydrolysis.

The contents were determined to be as follows: protein 35%, fat 5%, dietary fiber 13% and carbohydrate 38%. This composition is very similar to low fat milk (Table 3). In addition, a large amount of dietary fiber is present.

9% of the powder was dispersed in water using a Polytron PT3000 operating for 2 minutes. The particle size was then analyzed by light scattering using the conditions of example 1. A D90 of 58 microns was obtained and D50 of 24 microns. Viscosity was measured using a Physica MCR 501 (Anton Paar), with a Pelletier temperature of 25°C, with 15 points for 20 seconds. Bob length was 40 mm, bob diameter was 26.65mm, cup diameter was 28.92mm and active length: 120.2mm. Viscosity was found to be: 0.012 Pas (12cP) at 100 s⁻¹.

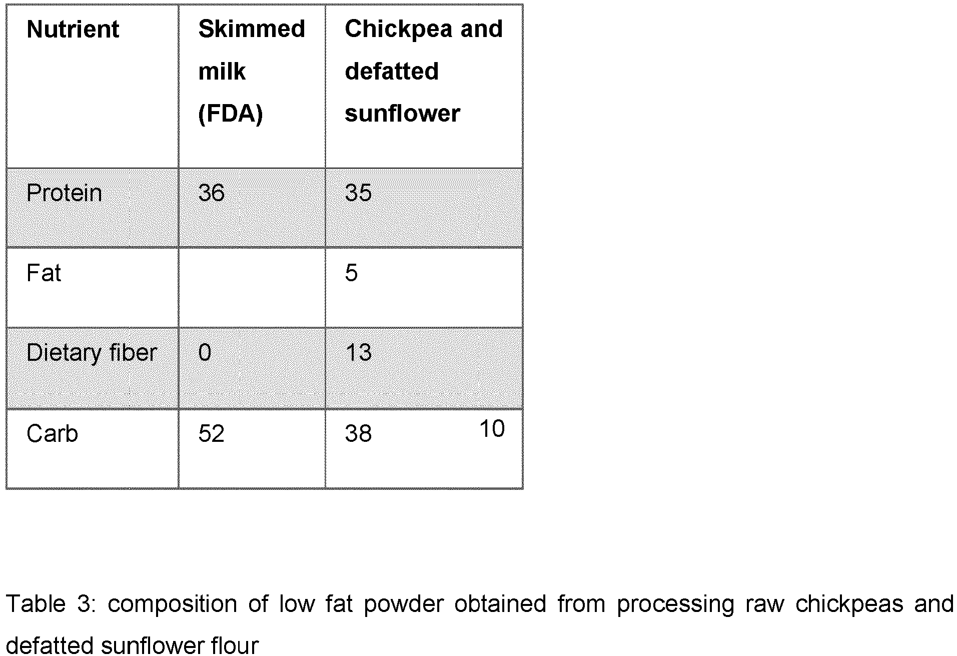

### Example 4: Full fat powder obtained from processing raw chickpeas, defatted sunflower flour and sunflower oil

The process used was identical to that used in example 3, except that 2.5% (versus the rest of the dispersion) sunflower oil (Migros, Switzerland) was added before homogenization and a pre-homogenization step was performed using a disperser device (Ystrall, X50/10).

9% of the powder was dispersed in water using a Polytron PT3000 operating for 2 minutes. The particle size was then analyzed by light scattering using the conditions of example 1. A D90 of 52 microns was obtained and a D50 of 18 microns. Viscosity was measured using a Physica MCR 501 (Anton Paar), with a Pelletier temperature of 25°C, with 15 points for 20 seconds. Bob length was 40 mm, bob diameter was 26.65mm, cup diameter was 28.92mm and active length: 120.2mm. Viscosity was found to be: 0.009 Pas (9cP) at a shear rate of 100s⁻¹.

The protein composition was determined by the Dumas method with a conversion factor of 6.25.The lipid composition was determined by acid hydrolysis.

The nutrient contents were determined to be as follows: protein 28%, fat 24%, Dietary fiber 12% and carbohydrate 27%. This composition is very similar to whole milk (Table 4). In addition, a large amount of dietary fiber is present.

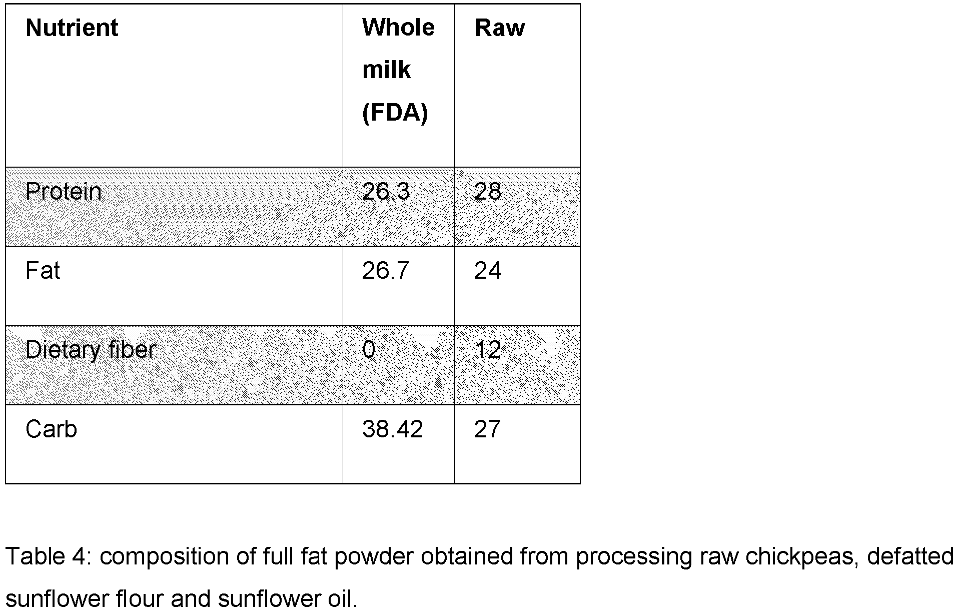

15% of this powder was solubilized to form a cream and delicious sauces could be formed from it.

### Example 5: Effect of roasting

Chickpeas were supplied by Alligro (France). Chickpea de-hulling was carried out using Laboratory shelling Machine (F.H. SCHULE Mühlenbau GmbH, Germany) for 90 s and at 90% of maximum speed.

The chickpeas were then roasted using a Salvid combisteam CSC furnace (Germany) operating at 160°C for 40 minutes.

Bio Sunflower seeds were purchased at Migros (Switzerland). The sunflower seeds were defatted using a manual press (Rommelsbacher OP 700 "Emilio", Germany) and a sunflower cake was obtained.

60 wt% of de-hulled roasted chickpea was dry mixed with 40 wt% defatted sunflower to get a composition close to milk. The size of the particles was reduced by hammer milling (Retsch ZM1, Switzerland).

12% of the solid mixture was added to 88% of water and introduced into a closed glass flask and was agitated with a magnetic agitator. The mixture was heated under agitation 15 minutes at 90°C, followed by cooling down to 80°C. 0.007 wt%, in reference to the total mass, of Ban 800 (Novozymes, Denmark), where the active component is the enzyme alpha amylase was added. The temperature was maintained at 80°C and agitation was carried out for 15 minutes.

The same procedure was applied without roasting the chickpea and smell was much less pleasant and more beany compared to when the chickpea had been roasted.

### Example 6 (not according to the invention):

### Powder and ready to drink obtained from processing chickpea flour and defatted sunflower flour

Chickpea flour was sourced from Vivien Paille (France).

70 wt% of chickpea flour was dry mixed with 30 wt% (partially) defatted sunflower flour (Heliaflor 45, Austrade, Germany).

12 wt% of the mixture was added to 88 wt% of water and was introduced into a Tetra Almix B200-100 VA Scanima reactor (Germany). The mixture was heated under agitation for 15 minutes at 90°C, followed by cooling down to 80°C. 0.007 wt%, in reference to the total mass, of Ban 800 (Novozymes, Denmark), where the active component is the enzyme alpha amylase was added. The temperature was maintained at 80°C and agitation was carried out for 15 minutes. The mixture was then heated for 81 seconds in an APV HTST (Germany) at 135°C to deactivate the alpha amylase.

Two passages of Ball-milling (Alpine Okawara, Japan) were then applied. The first passage was performed at 2000 rpm 10l/h and the second passage was performed at 2500 rpm 20l/h.

Homogenization (APV, HTST, Germany) was realized using pressure of 250/50 Bars.

During all the operations in liquid, the pH was adjusted either with NaOH or with HCl to maintain pH between 6.3 and 6.8.

Part of the liquid was treated by ultra high temperature treatment using a temperature of 139°C for 5 seconds (APV, HTST, Germany). This liquid alternative milk can be stored several months at room temperature without alteration of its properties. The particle size was then analyzed by light scattering using the conditions of example 1. A D90 of 82 microns and a D50 of 33 microns were obtained.

The rest of the liquid was pasteurized using a heat treatment of 107°C for 38 seconds (APV, HTST, Germany).

Part of this liquid was spray dried using a Tower Niro SD 6.3N (GEA, Denmark) with 160°C inlet temperature, 85°C outlet temperature and operating at 15kg/h. 9% of the powder was dispersed in water using a Polytron PT3000 operating for 2 minutes. The particle size was then analyzed by light scattering using the conditions of example 1. A D90 of 74 microns was obtained and a D50 of 20 microns. Viscosity was measured using a Physica MCR 501 (Anton Paar), with a Pelletier temperature of 25°C, with 15 points for 20 seconds. Bob length was 40 mm, bob diameter was 26.65mm, cup diameter was 28.92mm and active length: 120.2mm. The viscosity was found to be at a shear rate of 100s⁻¹: 0.0352 Pas (18cP).

The protein composition was determined by the Dumas method with a conversion factor of 6.25.The lipid composition was determined by acid hydrolysis.

The nutrient contents were determined to be as follows: protein 27%, fat 9%, Dietary fiber 14% and carbohydrate 42%.

The amino acid content and the amino acid scores are given in the following table 5:

**Table 5:**

| **Indispensable AA** | **Content in g/100g of product** | **Content in g/100g of protein** | **Amino acid ratio** |
|---|---|---|---|
| Tryptophan | 0,372 | 1,377778 | 1,620915 |
| Threonine | 1,01 | 3,740741 | 1,206691 |
| Isoleucine | 1,03 | 3,814815 | 1,19213 |
| Leucine | 1,76 | 6,518519 | 0,987654 |
| Lysine | 1,38 | 5,111111 | 0,896686 |
| Valine | 1,16 | 4,296296 | 0,999139 |
| Histidine | 0,603 | 2,233333 | 1,116667 |
| Sulfurous amino acids (Methionine+Cysteine) | 0,915 | 3,388889 | 1,255144 |
| Aromatic amino acids (Phe+Tyr) | 2,092 | 7,748148 | 1,490028 |

The amino acid score is the lowest amino acid ratio. It corresponds to the lysine. Therefore amino acid score is 0.90. The ratio of total lysine in mg to total protein in g is 51,1.

Part of the liquid obtained previously was roller dried using a Gooda Single Drum dryer type E5/5 with a drying surface of 0.75 m², operating with a speed of the main roller of 20% (2.1 RPM), a speed of the satellites of 60%, main roller temperature of 120°C, and a feed of 20l/hour. Roller dried samples were first milled with a Frewitt GLA-ORV and a grid of 0.3 mm. 9% of the powder was dispersed in water using a Polytron PT3000 operating for 2 minutes. The particle size was then analyzed by light scattering using the conditions of example 1. A D90 of 197microns and a D50 of 82 microns were obtained. Viscosity was measured using a Physica MCR 501 (Anton Paar), with a Pelletier temperature of 25°C, with 15 points for 20 seconds. Bob length was 40 mm, bob diameter was 26.65mm, cup diameter was 28.92mm and active length: 120.2mm. The viscosity was found to be at a shear rate of 100s⁻¹: 0.0108 Pas (18cP).

The Roller dried powder milled with the Frewitt GLA-ORV was further milled with a Hammer Mill model ZM1 by Retsch operating at speed 2 using a grid size of 0.5mm. 9% of this powder was dispersed in water using a Polytron PT3000 operating for 2 minutes. The particle size was then analyzed by light scattering using the conditions of example 1. A D90 of 119 microns and a D50 of 55 microns were obtained.

Part of the liquid obtained previously was vacuum dried using an oven dryer Heraeus VT6130P and a vacuum of 0.1 atm for 23 hours, temperature of 60°C. 9% of the powder was dispersed in water using a Polytron PT3000 operating for 2 minutes. The particle size was then analyzed by light scattering using the conditions of example 1. A D90 of 91 microns and a D50 of 28 microns were obtained. Viscosity was measured using a Physica MCR 501 (Anton Paar), with a Pelletier temperature of 25°C, with 15 points for 20 seconds. Bob length was 40 mm, bob diameter was 26.65mm, cup diameter was 28.92mm and active length: 120.2mm. The viscosity was found to be at a shear rate of 100s⁻¹: 0.0158 Pas (18cP).

### Example 7 (not according to the invention):

### Cowpea-pumpkin seed drink

Cowpea was sourced from Moulin Suisse (Switzerland). Bio pumpkins seeds were purchased at Migros (Switzerland). 50 wt% of cow pea beans was mixed with 50 wt% pumpkin seeds to get a composition close to milk. A powder was obtained using hammer milling (Retsch ZM1, Switzerland) operating at speed 2 with 12 knifes and grid size of 0.5 mm.

12 wt% of the solid mixture was added to 88 wt% of water and was introduced into a reactor. The mixture was heated under agitation for 15 minutes at 90°C, followed by cooling down to 80°C. 0.0025 wt%, in reference to total weight, of Ban 800 (Novozymes, Denmark) was added, where the active component is the enzyme alpha amylase. The temperature was maintained at 80°C and agitation was carried out for 15 minutes.

Two passages of Ball-milling (Retsch PM200, Germany) were then applied at 500 rpm, 10min. 30g of water was added to every 100 g of liquid. A ready drink milk alternative was obtained with a very nice flavor. The particle size was determined using a Malvern 3000 instrument using the Mie model with stirrer speed 2000, material name: protein, refractive index 1.54, particle density 1.2 and absorption index 0.01, dispersant was water and corresponding refractive index 1.33. Result is the average of 5 measurements. The D90 was determined to be 69 microns and D50 was 16.5 microns.

The protein composition was determined by the Dumas method with a conversion factor of 6.25. The lipid composition was determined by acid hydrolysis.

The composition was determined to be as follows: protein 2.6%, fat 2.06%, 0.96% dietary fiber and 2,15% carbohydrate. This composition is rich in protein. In addition, a large amount of dietary fiber is present. The beverage has a pleasant taste with slight beany taste and no graininess could be perceived.

### Example 8 (not according to the invention): Fava bean Hemp drink

Split fava bean was sourced from Hodmedod's British Beans superfood market. A powder was obtained using hammer milling (Retsch ZM1, Switzerland) operating at speed 2 with 12 knifes and grid size of 0.5 mm.

Partially defatted hemp flour called Hemp Protein 50 was from All Origin Treasure (AOT, Germany). 70 wt% of Fava bean powder was dry mixed with 30 wt% defatted hemp flour. 12 wt% of the solid mixture was added to 88 wt% of water and was introduced into a reactor. The mixture was heated under agitation for 15 minutes at 90°C, followed by cooling down to 80°C. 0.0025 wt%, in reference to total weight, of Ban 800 (Novozymes, Denmark) was added, where the active component is the enzyme alpha amylase. The temperature was maintained at 80°C and agitation was carried out for 15 minutes. The dispersion was then heated at 121°C for 3 minutes to deactivate the enzymes.

Two passages of plenary Ball-milli (PM 200 Retsch) were then applied at 500 rpm, 10min 30g of water was added to every 100 g of liquid. A ready drink milk alternative was obtained. The particle size was determined using a Malvern 3000 instrument using the Mie model with stirrer speed 2000, material name: protein, refractive index 1.54, particle density 1.2 and absorption index 0.01, dispersant was water and corresponding refractive index 1.33. Result is the average of 5 measurements. The D90 was determined to be 143 microns and D50 was 30.4 microns.

The protein composition was determined by the Dumas method with a conversion factor of 6.25. The lipid composition was determined by acid hydrolysis. The composition was determined to be as follows: protein 3.36%, fat 0.64%, dietary fiber 1.47% and carbohydrate 2.07%. This composition leads to protein content similar to milk, lower carbohydrate than milk. In addition, a large amount of dietary fiber is present.

### Example 9 (not according to the invention):

### Greenpea peanut drink

Greenpea was sourced from Vivien Paille (France). Peanuts were supplied from Enjoy Bistro. The peanuts were defatted using a manual press (Rommelsbacher OP 700 "Emilio", Germany). A peanut cake and an oily phase were obtained.

60 wt% of green pea was dried mixed with 40 wt% defatted peanut (pumpkin cake) to get a composition close to milk. A powder was obtained using hammer milling (Retsch ZM1, Switzerland) operating at speed 2 with 12 knifes and grid size of 0.5 mm.

12 wt% of the solid mixture was added to 88 wt% of water and was introduced into a reactor. The mixture was heated under agitation for 15 minutes at 90°C, followed by cooling down to 80°C. 0.0025 wt%, in reference to total weight, of Ban 800 (Novozymes, Denmark) was added, where the active component is the enzyme alpha amylase. The temperature was maintained at 80°C and agitation was carried out for 15 minutes. The dispersion was then heated at 121°C for 3 minutes to deactivate the enzymes.

Two passages of Ball-milling (Retsch PM200, Germany) were then applied at 500 rpm, 10min. 30g of water was added to every 100 g of liquid. A ready drink milk alternative was obtained with a very nice flavor. The particle size was determined using a Malvern 3000 instrument using the Mie model with stirrer speed 2000, material name: protein, refractive index 1.54, particle density 1.2 and absorption index 0.01, dispersant was water and corresponding refractive index 1.33. Result is the average of 5 measurements. The D90 was determined to be 263 microns and D50 was 43 microns.

The protein composition was determined by the Dumas method with a conversion factor of 6.25. The lipid composition was determined by acid hydrolysis. The composition was determined to be as follows: protein 2.61%, fat 1.43%, dietary fiber 1.72% and carbohydrate 2.51%. This composition is rich in protein. In addition, a large amount of dietary fiber is present. The beverage has a pleasant taste with nutty flavor.

### Example 10: Chickpea Almond drink

Chickpeas were sourced from Vivien Paille (France). Chickpea de-hulling was carried out using Laboratory shelling Machine (F.H. SCHULE Mühlenbau GmbH, Germany) for 90s and at 90% of maximum speed.

The chickpeas were then roasted using a Salvid combisteam CSC furnace (Germany) operating at 160°C for 40 minutes. A chickpea powder was obtained using hammer milling (Retsch ZM1, Switzerland) operating at speed 2 with 12 knifes and grid size of 0.5 mm.

70% of chickpea powder was mixed with 30% (partially) defatted almond flour (AOT, Germany). 12 wt% of the solid mixture was added to 88 wt% of water and was introduced into a reactor. The mixture was heated under agitation for 15 minutes at 90°C, followed by cooling down to 80°C. 0.0025 wt%, in reference to total weight, of Ban 800 (Novozymes, Denmark) was added, where the active component is the enzyme alpha amylase. The temperature was maintained at 80°C and agitation was carried out for 15 minutes. The dispersion was then heated at 121°C for 3 minutes to deactivate the enzymes. Two passages of Ball-milling (Retsch PM200, Germany) were then applied at 500 rpm, 10min. 30g of water was added to every 100 g of liquid. A ready drink milk alternative was obtained with a very nice flavor.

The particle size was determined using a Malvern 3000 instrument using the Mie model with stirrer speed 2000, material name: protein, refractive index 1.54, particle density 1.2 and absorption index 0.01, dispersant was water and corresponding refractive index 1.33. Result is the average of 5 measurements. The D90 was determined to be 67.2 nm microns and D50 was 19.2 microns. The protein composition was determined by the Dumas method with a conversion factor of 6.25. The lipid composition was determined by acid hydrolysis.

The composition was determined to be as follows: protein 2.9% fat 0.75%, dietary fiber 1,3% and carbohydrate 3.75. This composition is rich in protein. In addition, a large amount of dietary fiber is present. The beverage has a pleasant taste with nutty/almond flavor.

### Example 11: Almond chickpea drink

Another drink was realized by mixing 30% of chickpea powder obtained in example 10 mixed with 70% (partially) defatted almond flour (AOT, Germany). 12 wt% of the solid mixture was added to 88 wt% of water and was introduced into a reactor. The mixture was heated under agitation for 15 minutes at 90°C, followed by cooling down to 80°C. 0.0025 wt%, in reference to total weight, of Ban 800 (Novozymes, Denmark) was added, where the active component is the enzyme alpha amylase. The temperature was maintained at 80°C and agitation was carried out for 15 minutes. The dispersion was then heated at 121°C for 3 minutes to deactivate the enzymes. Two passages of Ball-milling (Retsch PM200, Germany) were then applied at 500 rpm, 10min. 30g of water was added to every 100 g of liquid. A ready drink milk alternative was obtained with a very nice flavor. The particle size was determined using a Malvern 3000 instrument using the Mie model with stirrer speed 2000, material name: protein, refractive index 1.54, particle density 1.2 and absorption index 0.01, dispersant was water and corresponding refractive index 1.33. Result is the average of 5 measurements. The D90 was determined to 54.4 microns and D50 was 15.6 microns. The protein composition was determined by the Dumas method with a conversion factor of 6.25. The lipid composition was determined by acid hydrolysis. The composition was determined to be as follows: protein 3.8% fat 0.9%, dietary fiber 1,33% and carbohydrate 1.8%. This composition is rich in protein. In addition, a large amount of dietary fiber is present. The beverage has a very pleasant taste with almond/nutty flavor.

### Example 12: Drink obtained from processing chickpea pulses and defatted sunflower flour and using colloidal mill and homogenisation

Chickpeas were sourced from Vivien Paille (France). Chickpea de-hulling was carried out using Laboratory shelling Machine (F.H. SCHULE Mühlenbau GmbH, Germany) for 90s and at 90% of maximum speed. The chickpeas were then roasted using a Salvid combisteam CSC furnace (Germany) operating at 160°C for 40 minutes. A chickpea powder was obtained using hammer milling (Retsch ZM1, Switzerland) operating at speed 2 with 12 knifes and grid size of 0.5 mm. 70 wt% of the obtained chickpea powder was dry mixed with 30 wt% (partially) defatted sunflower flour (Heliaflor 45, Austrade, Germany). 30% of the obtained mixture was mixed with 70% of water. To refine the size, the obtained dispersion was passed in a colloidal mill (Ika Labor Pilot) having a gap of 50 microns. The dispersion was then diluted in water to have 12% of solid matter. The mixture was heated under agitation for 15 minutes at 90°C, followed by cooling down to 80°C. 0.0025 wt%, in reference to total weight, of Ban 800 (Novozymes, Denmark) was added, where the active component is the enzyme alpha amylase. The temperature was maintained at 80°C and agitation was carried out for 15 minutes. The dispersion was then heated at 121°C for 3 minutes to deactivate the enzymes. It was then diluted to 8.5 % solid. The liquid was passed through a Nyro Panda Plus homogenizer with pressure 300/50 bars. The D90 was found to be 98 microns and the D50 26 microns. The tasted product was very smooth with no graininess and has a pleasant nutty taste. The composition is: protein 2.5%, fat 0.75%, Dietary fiber 1.2% and carbohydrate 38%.

## Claims

1. A vegan food composition comprising at least 30 wt% legume and at least 20 wt% non-legume seeds on a dry basis, wherein said composition comprises at least 5 wt% dietary fiber provided by the legume and at least 22 wt% protein provided by any one or more of said legume and non-legume seed, wherein the D90 particle size for the volume weighted size distribution of said composition is less than 400 microns, wherein the legume is chickpea which is de-hulled and roasted, and wherein the vegan food composition is entirely devoid of animal products, or animal derived products, and wherein the D90 particle size for the volume weighted size distribution is the diameter of particle, for which 90% of the volume of particles have a diameter smaller than this D90.

2. A vegan food composition according to claim 1, wherein the composition is a milk analogue.

3. A vegan food composition according to claims 1 to 2, comprising between 40 wt% and 70 wt% legume.

4. A vegan food composition according to claims 1 to 3, comprising between 24 wt% and 40 wt% protein provided by the legume and non-legume seeds.

5. A vegan food composition according to claims 1 to 4, wherein the D90 particle size of the composition is less than 300 microns.

6. A vegan food composition according to claims 1 to 5, wherein the composition has a D50 particle size of less than 50 microns.

7. A food product comprising the vegan food composition according to claims 1 to 6.

8. A method of making a vegan food composition entirely devoid of animal products, or animal derived products, comprising:
a. Mixing at least 30 wt% legume and at least 20 wt% non-legume seed or non-legume nuts on a dry basis, wherein the legume is de-hulled and roasted chickpea;
b. Reducing the D90 particle size for the volume weighted size distribution to less than 1000 microns.;
c. Adding an aqueous phase;
d. Adding enzyme to prevent gelation, heating, and de-activating the enzyme;
e. Reducing particle size so that the D90 particle size for the volume weighted size distribution is less than 400 microns;
f. Homogenising;
g. Sterilizing or pasteurizing,
wherein the D90 particle size for the volume weighted size distribution is the diameter of particle, for which 90% of the volume of particles have a diameter smaller than this D90.

9. A method according to claim 8, wherein the non-legume seed is sunflower.

10. A method according to claims 8 to 9, wherein at least 20% of fat is removed from the non-legume seed.

11. A method according to claims 8 to 10, wherein the enzyme is alpha amylase.

12. A method according to claims 8 to 11, wherein micronization is performed by a Jetmill, or a Ball-mill.

13. A method according to claims 8 to 12, wherein the vegan food composition is deodorized using vacuum at a temperature higher than 40°C.

## Patentansprüche

1. Vegane Nahrungsmittelzusammensetzung, umfassend mindestens 30 Gew.-% Hülsenfrucht und mindestens 20 Gew.-% Nicht-Hülsenfruchtsamen auf einer Trockenbasis, wobei die Zusammensetzung mindestens 5 Gew.-% durch die Hülsenfrucht bereitgestellte Ballaststoffe und mindestens 22 Gew.-% durch eine beliebige eine oder mehrere der Hülsenfrucht und des Nicht-Hülsenfruchtsamens bereitgestelltes Protein umfasst, wobei die D90-Partikelgröße für die volumengewichtete Größenverteilung der Zusammensetzung weniger als 400 Mikrometer beträgt, wobei die Hülsenfrucht Kichererbse ist, die geschält und geröstet ist, und wobei die vegane Nahrungsmittelzusammensetzung völlig frei von tierischen Produkten oder von Produkten tierischen Ursprungs ist und wobei die D90-Partikelgröße für die volumengewichtete Größenverteilung der Durchmesser von Partikeln ist, bei denen 90 % des Partikelvolumens einen Durchmesser aufweisen, der kleiner als dieser D90 ist.

2. Vegane Nahrungsmittelzusammensetzung nach Anspruch 1, wobei die Zusammensetzung ein Milchanalogon ist.

3. Vegane Nahrungsmittelzusammensetzung nach den Ansprüchen 1 bis 2, umfassend zwischen 40 Gew.-% und 70 Gew.-% Hülsenfrucht.

4. Vegane Nahrungsmittelzusammensetzung nach den Ansprüchen 1 bis 3, umfassend zwischen 24 Gew.-% und 40 Gew.-% Protein, das durch die Hülsenfrucht und die Nicht-Hülsenfruchtsamen bereitgestellt wird.

5. Vegane Nahrungsmittelzusammensetzung nach den Ansprüchen 1 bis 4, wobei die D90-Partikelgröße der Zusammensetzung weniger als 300 Mikrometer beträgt.

6. Vegane Nahrungsmittelzusammensetzung nach den Ansprüchen 1 bis 5, wobei die Zusammensetzung eine D50-Partikelgröße von weniger als 50 Mikrometer aufweist.

7. Nahrungsmittelprodukt, umfassend die vegane Nahrungsmittelzusammensetzung nach den Ansprüchen 1 bis 6.

8. Verfahren zum Herstellen einer veganen Nahrungsmittelzusammensetzung, die völlig frei von tierischen Produkten oder von Produkten tierischen Ursprungs ist, umfassend:
a. Mischen von mindestens 30 Gew.-% Hülsenfrucht und mindestens 20 Gew.-% Nicht-Hülsenfruchtsamen oder Nicht-Hülsenfruchtnüssen auf einer Trockenbasis, wobei die Hülsenfrucht geschälte und geröstete Kichererbse ist;
b. Reduzieren der D90-Partikelgröße für die volumengewichtete Größenverteilung auf weniger als 1000 Mikrometer.;
c. Hinzufügen einer wässrigen Phase;
d. Hinzufügen eines Enzyms, um eine Gelierung, Erhitzung und Deaktivierung des Enzyms zu verhindern;
e. Reduzieren der Partikelgröße, sodass die D90-Partikelgröße für die volumengewichtete Größenverteilung weniger als 400 Mikrometer beträgt;
f. Homogenisieren;
g. Sterilisieren oder Pasteurisieren,
wobei die D90-Partikelgröße für die volumengewichtete Größenverteilung der Durchmesser von Partikeln ist, bei denen 90 % des Partikelvolumens einen Durchmesser aufweisen, der kleiner als dieser D90 ist.

9. Verfahren nach Anspruch 8, wobei der Nicht-Hülsenfruchtsamen Sonnenblume ist.

10. Verfahren nach den Ansprüchen 8 bis 9, wobei mindestens 20 % Fett aus dem Nicht-Hülsenfruchtsamen entfernt werden.

11. Verfahren nach den Ansprüchen 8 bis 10, wobei das Enzym Alpha-Amylase ist.

12. Verfahren nach den Ansprüchen 8 bis 11, wobei eine Mikronisierung durch eine Strahlmühle oder eine Kugelmühle durchgeführt wird.

13. Verfahren nach den Ansprüchen 8 bis 12, wobei die vegane Nahrungsmittelzusammensetzung unter Verwendung von Vakuum bei einer Temperatur über 40 °C desodoriert wird.

## Revendications

1. Composition alimentaire végétalienne comprenant au moins 30 % en poids de légumineuses et au moins 20 % en poids de graines de non-légumineuses sur une base sèche, dans laquelle ladite composition comprend au moins 5 % en poids de fibres alimentaires fournies par la légumineuse et au moins 22 % en poids de protéines fournies par une ou plusieurs desdites légumineuses et graines de non-légumineuses, dans laquelle la taille de particule D90 pour la distribution de taille pondérée en volume de ladite composition est inférieure à 400 microns, dans laquelle la légumineuse est un pois chiche qui est décortiqué et torréfié, et dans laquelle la composition alimentaire végétalienne est entièrement dépourvue de produits animaux ou de produits dérivés d'animaux, et dans laquelle la taille de particule D90 pour la distribution de taille pondérée en fonction du volume est le diamètre de la particule, pour laquelle 90 % du volume des particules ont un diamètre inférieur à ce D90.

2. Composition alimentaire végétalienne selon la revendication 1, dans laquelle la composition est un analogue de lait.

3. Composition alimentaire végétalienne selon les revendications 1 à 2, comprenant entre 40 % en poids et 70 % en poids de légumineuses.

4. Composition alimentaire végétalienne selon les revendications 1 à 3, comprenant entre 24 % en poids et 40 % en poids de protéines fournies par les graines de légumineuses et de non-légumineuses.

5. Composition alimentaire végétalienne selon les revendications 1 à 4, dans laquelle la taille des particules D90 de la composition est inférieure à 300 microns.

6. Composition alimentaire végétalienne selon les revendications 1 à 5, dans laquelle la composition a une taille de particule D50 inférieure à 50 microns.

7. Produit alimentaire comprenant la composition alimentaire végétalienne selon les revendications 1 à 6.

8. Procédé de fabrication d'une composition alimentaire végétalienne entièrement dépourvue de produits d'origine animale ou de produits dérivés d'animaux, comprenant :
a. Le mélange d'au moins 30 % en poids de légumineuses et d'au moins 20 % en poids de graines ou de noix de non-légumineuses sur une base sèche, dans lequel la légumineuse est un pois chiche décortiqué et torréfié ;
b. La réduction de la taille des particules D90 pour la distribution granulométrique pondérée en fonction du volume à moins de 1 000 microns ;
c. L'ajout d'une phase aqueuse ;
d. L'ajout d'enzyme pour éviter la gélification, le chauffage et la désactivation de l'enzyme ;
e. La réduction de la taille des particules de manière à ce que la taille des particules D90 pour la distribution de taille pondérée en fonction du volume soit inférieure à 400 microns ;
f. L'homogénéisation ;
g. La stérilisation ou pasteurisation,
dans lequel la taille de particule D90 pour la distribution de taille pondérée en fonction du volume est le diamètre de la particule, pour lequel 90 % du volume des particules ont un diamètre inférieur à ce D90.

9. Procédé selon la revendication 8, dans lequel la graine non légumineuse est le tournesol.

10. Procédé selon les revendications 8 à 9, dans lequel au moins 20 % de la graisse est retirée de la graine de non-légumineuse.

11. Procédé selon les revendications 8 à 10, dans lequel l'enzyme est l'alphaamylase.

12. Procédé selon les revendications 8 à 11, dans lequel la micronisation est effectuée par un broyeur à jet ou un broyeur à boulets.

13. Procédé selon les revendications 8 à 12, dans lequel la composition alimentaire végétalienne est désodorisée à l'aide d'un sous vide à une température supérieure à 40 °C.
